# EUROPÄISCHE PATENTSCHRIFT

(11) **EP 0 690 253 B1**
(45) Veröffentlichungstag und Bekanntmachung des Hinweises auf die Patenterteilung: **13.05.1998**
(21) Anmeldenummer: 95250157.5
(22) Anmeldetag: 29.06.1995
(51) Int. Cl.: F16K 5/20

(54) **Vorrichtung zum Abdichten von Absperrorganen**
Obturator sealing device
Dispositif d'étanchement pour organes d'obturation

(30) Priorität: 01.07.1994 DE 4423801
(43) Veröffentlichungstag der Anmeldung: 03.01.1996
(73) Patentinhaber: Franz Schuck GmbH, 89552 Steinheim (DE)
(72) Erfinder: Hoffmann, Michael, D-13403 Berlin (DE)
(74) Vertreter: Radünz, Ingo

(56) Entgegenhaltungen:
- EP-A- 0 161 056
- DE-A- 2 005 794
- DE-A- 2 632 397
- DE-A- 2 938 265
- FR-A- 1 260 929
- PATENT ABSTRACTS OF JAPAN vol. 4, no. 125 (M-30) (607) 3. September 1980 & JP-A-55 082 864 (HITACHI)

## Beschreibung

Die Erfindung betrifft eine Vorrichtung zum Abdichten von in Leitungen für die Förderung von Flüssigkeiten oder Gasen angeordneten Absperrorganen, insbesondere eines Kükens eines Kugelhahns nach dem Oberbegriff des Anspruches 1.

Im Rohrleitungsbau verwendete Kugelhähne weisen ein in die Rohrleitung einsetzbares Gehäuse und ein das Absperrorgan bildendes, in dem Gehäuse um eine Achse drehbares, kugeliges Küken auf, wobei das Küken gegen das Gehäuse mittels gegen die Mantelfläche des Kükens drückenden Dichtungen abdichtbar ist.

Es sind schwimmend gelagerte Sitzringsysteme bekannt, bei denen ein Dichtring, beispielsweise aus Teflon, in einen Sitzring geklammert ist und hervorragt, wobei O-Ringe oder dergleichen das Sitzringsystem zum Gehäuse abdichten. Federelemente sind zwischen dem Sitzring und dem Gehäuse angeordnet und gewährleisten durch permanente Anpressung die erforderliche Flächenpressung zwischen Küken und Dichtring. Die dem Leitungsdruck ausgesetzten Flächen der Sitzringe sind so dimensioniert, daß sich aufgrund des auf die Flächen wirkenden Leitungsdrucks eine druckabhängige Dichtkraft ergibt, die zusammen mit der Federkraft die auf den Dichtring wirkende Gesamtdichtkraft bildet. Diese bekannten Sitzringe wirken selbstentlastend (Double Block and Bleed), d.h. bei Überschreiten des zulässigen Gehäuseinnendrucks heben die Sitzringe kurzzeitig vom Kugelküken ab, wodurch ein Druckausgleich zur Rohrleitung bewirkt wird.

Es sind auch doppelt wirkende Sitzringsysteme bekannt (Double Piston), bei denen die Sitzringe auf der Abströmseite ebenfalls dichten, wobei bei diesem System eine Selbstentlastung ohne zusätzliche Aggregate ausgeschlossen ist.

Diese bekannten Systeme haben den Nachteil, daß der Sitzring vor dem Schalten des Kugelkükens nicht abhebt bzw. entlastet, so daß der Druckring auf der Mantelfläche schabt und der Verschleiß groß und damit die Lebensdauer sowohl des Kükens als auch des Sitzringsystems verringert wird. Darüber hinaus kann das Sitzringsystem nur abhängig von den fest vorgegebenen Differenzdruckflächen und der Federkraft an das Kugelküken angepreßt werden.

Aus der DE 29 38 265 A1 ist ein regelbares System für die Anpreßkraft von Dichtungen bei Kugelhähnen bekannt, bei dem der den Dichtring tragende Sitzring als Kolben mit einem mittigen Flansch ausgebildet ist. Zwischen Gehäuse und jeweiliger Flanschfläche werden zwei Kammern gebildet, in die ein Druckmedium eingelassen werden kann. Je nach auf die jeweilige Flanschfläche wirkendem Druck wird der Sitzring gegen die Mantelfläche des Kugelkükens gedrückt oder von ihr abgehoben. Ein derartiges System funktioniert nicht mehr, wenn die Steuerung bzw. Regelung des Druckmediums zum Beispiel im Brandfall ausfällt.

Der Erfindung liegt daher die Aufgabe zugrunde, eine Vorrichtung zum Abdichten von in Leitungen für die Förderung von Flüssigkeiten oder Gasen angeordneten Absperrorganen zu schaffen, die zunächst die Standardanforderungen des mediendruckabhängigen Abdichtens, des Double Block and Bleed bzw. des Double Piston erfüllt, die einfach in der Konstruktion ist und die bei der Dichtungsanordnung auf Wunsch an das Absperrorgan angepreßt oder von ihm abgehoben werden kann, wobei bei Versagen der bei der Vorrichtung verwendeten Steuerung/Regelung des Druckmediums eine einwandfreie Funktion hinsichtlich der Abdichtung gewährleistet wird.

Diese Aufgabe wird erfindungsgemäß durch die kennzeichnenden Merkmale des Anspruches 1 gelöst. Dadurch, daß über die Drucksteuerung der Mitnehmerkörper den Sitzring vor dem Schalten des Absperrorgans abhebt, schleift der Druckring beim Schalten nicht auf der Mantelfläche und somit wird die Lebensdauer sowohl des Druckrings als auch des Absperrorgans erhöht. Durch Vorsehen der gesteuerten Druckbeaufschlagung des Zwischenkolbens kann der Anpreßdruck des Dichtrings an die Mantelfläche bei Bedarf erhöht werden. Bei Versagen der Drucksteuerung, beispielsweise durch Unterbrechung der Druckleitung, arbeitet die Dichtungsanordnung unabhängig von der Drucksteuerung bzw. Regelung und der Anpreßdruck wird über die zwischen dem Sitzring und dem Zwischenkolben angeordneten Feder realisiert. Da maximal zwei Bohrungen für die Drucksteuerung nach außen vorgesehen sein müssen, ist die Konstruktion relativ einfach.

Durch die in den Unteransprüchen angegebenen Maßnahmen sind vorteilhafte Weiterbildungen und Verbesserungen möglich. Die erfindungsgemäße Dichtungsanordnung ist auch für Sitzringsysteme anwendbar, die auf der druckabgewandten Seite dichten.

Aufgrund des Vorhandenseins des Mitnehmerkörpers, der als Anschlag dient, kann die Sitzringdurchbiegung beim Schaltvorgang begrenzt werden. Durch Vorsehen eines entfernbaren Anschlagelementes kann die Dichtungsanordnung von der Hahnmitte weggeschoben werden, was für die Montage bzw. Demontage von sogenannten "Top entry" Kugelhähnen notwendig ist.

Ausführungsbeispiele der Erfindung sind in der Zeichnung dargestellt und werden in der nachfolgenden Beschreibung näher erläutert. Es zeigen:
- Fig. 1: einen Teilschnitt durch ein erstes Ausführungsbeispiel nach der Erfindung mit einer selbstentlastenden Dichtungsanordnung,
- Fig. 2: einen Teilschnitt durch ein zweites Ausführungsbeispiel der vorliegenden Erfindung mit einer selbstentlastenden Dichtungsanordnung, und
- Fig. 3: einen Teilschnitt durch ein drittes Ausführungsbeispiel der Erfindung mit einer doppelt dichtenden Dichtungsanordnung.

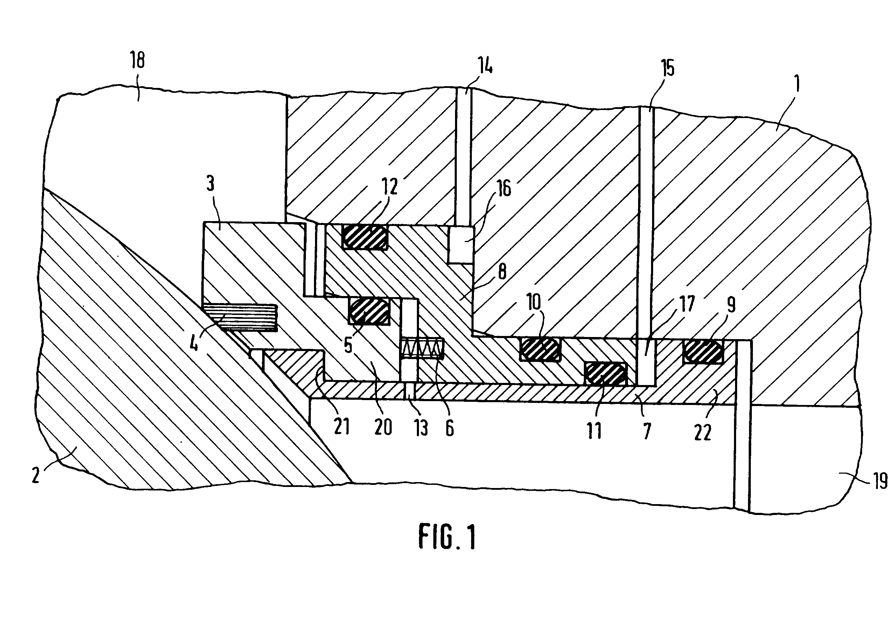

Der in Fig. 1 im Längsteilschnitt dargestellte Kugelhahn weist ein Gehäuse 1 auf, in dem ein Kugelküken 2 aufgenommen ist, das in dem Gehäuse 1 um eine zur Durchflußrichtung senkrecht stehende Achse drehbar ist. Eine Dichtungsanordnung 20 dichtet das Kugelküken 2 gegen das Gehäuse 1 ab. Die Dichtungsanordnung 20 besteht aus einem einen Dichtring 4 abstützenden Sitzring 3, einem hülsenartigen, langgestreckten Mitnehmerkörper 7 und einem zwischen Sitzring 3 und Mitnehmerkörper 7 angeordneten Zwischenkolben 8. Der Mitnehmerkörper 7 ist in seinem dem Küken zugewandten Ende mit einer Abstufung 21 versehen, die in eine entsprechende Vertiefung des Sitzrings 3 eingreift, so daß die entsprechenden Schultern des Sitzrings 3 und der Abstufung 21 des Mitnehmerkörpers 7 eine formschlüssige Verbindung bilden. Das vom Küken 2 abgewandte Ende des Mitnehmerkörpers ist als Flansch 22 ausgebildet, der mit seinen Seitenflächen im Gehäuse 1 gleitet, wobei zwischen Stirnfläche des Flansches 22 und Gehäuse 1 ein ausreichender Abstand besteht. Der Flansch ist gegen das Gehäuse über eine O-Ringdichtung 9 abgedichtet.

Der Zwischenkolben 8 ist als Stufenkolben ausgebildet und ist einerseits zwischen Gehäuse und hülsenartigem Teil des Mitnehmerkörpers 7 sowie zwischen Gehäuse 1 und Sitzring 3 angeordnet, wobei Sitzring 3, Mitnehmerkörper 7 und Zwischenkolben 8 relativ zueinander verschiebbar sind. Der Sitzring 3 ist gegen den Zwischenkolben 8 über eine O-Ringdichtung 5 abgedichtet, zu dem Gehäuse 1 mit einem O-Ring 12 abgedichtet und weiterhin ist der Zwischenkolben 8 gegen das Gehäuse 1 einerseits und gegen den Mitnehmerkörper andererseits über O-Ringe 10 und 11 abgedichtet.

In dem Zwischenkolben 8 sind eine Mehrzahl von Vertiefungen vorgesehen, in denen Federelemente 6 angeordnet sind, die sich gegen eine vom Küken 2 abgewandte Stirnfläche des Sitzrings 3 abstützen und die eine Vorspannkraft in Andruckrichtung des Dichtrings 4 ausüben. In dem Mitnehmerkörper 7 sind im Bereich des Zwischenraums zwischen Sitzring 3 und Zwischenkolben 8, in dem sich die Federelemente 6 befinden, eine Mehrzahl von Verbindungsbohrungen 13 vorgesehen, über die der Zwischenraum mit der Leitung 19 verbunden ist.

Zwischen den vom Küken abgewandten Stirnflächen des Zwischenkolbens 8 und des Gehäuses 1 einerseits und dem Flansch 22 des Mitnehmerkörpers 7 andererseits sind jeweils eine Kammer 16 und eine Kammer 17 vorgesehen, die jeweils über Bohrungen 14 und 15 und über eine Steuerung mit einer nicht dargestellten Quelle für ein Druckmedium verbunden sind.

Die Funktionsweise der in Fig. 1 dargestellten Vorrichtung ist wie folgt. Wenn den Bohrungen 14, 15 kein Druckmedium zugeführt wird, d.h., wenn in den Kammern 16, 17 Umgebungsdruck herrscht und in der Leitung 19 der Druck des zu fördernden Mediums vorhanden ist, wird der Dichtring 4 aufgrund der entsprechenden Federkraft der Federelemente 6 gegen die Mantelfläche des Kükens 2 gedrückt, wobei zusätzlich eine Differenzdruckkraft auf den Dichtring 4 wirkt, die aufgrund des auf die Flächen der Dichtungsanordnung wirkenden Drucks des Mediums in der Leitung 19 hervorgerufen wird. Beispielsweise bestimmt sich diese zusätzliche Druckkraft durch die zwischen Außendurchmesser des O-Rings 5 und des Innendurchmessers des Dichtring 4 vorgegebenen Differenzdruckfläche.

Wenn der Druck im Innenraum 18 zu hoch wird, wird der Sitzring 3 aufgrund des auf seine Flächen wirkenden Drucks des Innenraums 18 angehoben und es kann ein Druckausgleich zur Leitung 19 stattfinden.

Wenn ein höherer Anpreßdruck des Dichtrings 4 gewünscht wird, wird über die Bohrung 14 in die Kammer 16 das Druckmedium mit höherem Druck geleitet, wodurch sich der Zwischenkolben 8 zum Küken 2 hin verschiebt und die Federelemente 6 zusammengedrückt werden. Abhängig von der Höhe des Drucks in der Kammer 16 kann somit der Anpreßdruck des Dichtrings 4 gesteuert werden.

Wenn nunmehr das Küken 2 um die senkrecht zu der Durchflußrichtung stehenden Achse geschaltet werden soll, soll während der Schaltzeit der Dichtring 4 abheben. Dazu wird das Druckmedium über die Bohrung 15 in die Kammer 17 geleitet, worauf durch den auf die dem Zwischenkolben 8 zugewandten Fläche des Flansches 22 wirkenden Druck des Druckmediums entgegen der Federkraft der Federelemente 6 und des auf die Differenzflächen wirkenden Drucks des in der Leitung 19 strömenden Mediums der Mitnehmerkörper 7 zum Gehäuse 1 hin verschoben wird, wobei der Sitzring 3 aufgrund der formschlüssigen Verbindung an der Abstufung 21 mit dem Dichtring 4 vom Küken 2 abgehoben wird.

Das Küken 2 kann nun geschaltet werden und nach Beendigung des Schaltvorganges wird der Druck in der Kammer 17 beispielsweise durch den Umgebungsdruck ersetzt, so daß die Federelemente 6 den Sitzring 3 mit Dichtring 4 wieder in die abdichtende Stellung bringen.

Bei großen Abmessungen der Kugelhähne tritt eine erhöhte Gefahr einer Sitzringdurchbiegung aufgrund der Zwischenstellung beim Schaltvorgang auf, wodurch wegen der Durchbiegung stellenweise eine hohe Kantenpressung durch die Kante zwischen Öffnung und Mantelfläche des Kükens vorhanden ist. Der Mitnehmerkörper 7 dient bei der vorliegenden Erfindung als Anschlag, um die Biegung zu begrenzen.

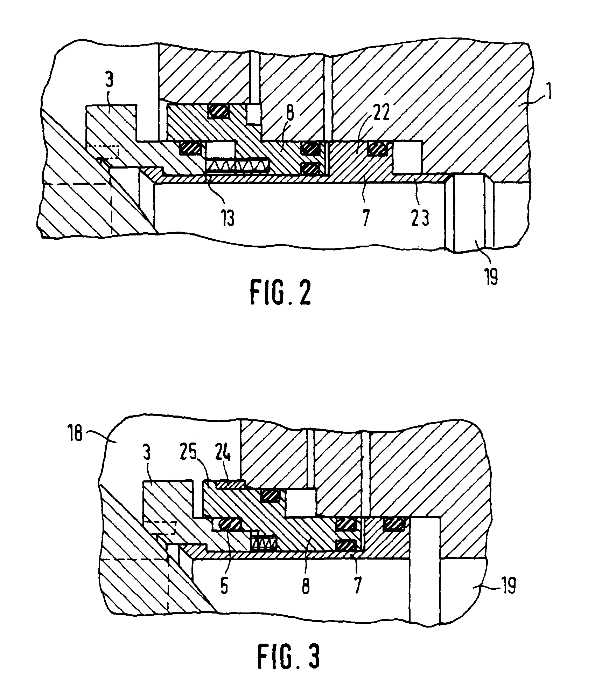

In Fig. 2 ist eine weitere Ausführungsform der vorliegenden Erfindung dargestellt, die sich von dem Ausführungsbeispiel nach Fig. 1 nur durch die Form des Mitnehmerkörpers 7 unterscheidet. Der Mitnehmerkörper schließt nicht mit dem Flansch 22 ab, sondern es ist noch ein Absatz 23 mit einem zum Flansch verringerten Durchmesser vorgesehen, der im Gehäuse 1 gleitet und den zwischen Flansch und Gehäuse vorgesehenen Zwischenraum zur Leitung 19 hin abschließt. Auf diese Weise können sich in dem Zwischenraum keine oder wenig Ablagerungen absetzen. Der Druck des durch die Leitung strömenden Mediums wirkt aufgrund der Verbindungsbohrungen 13 auf die Stirnfläche des Sitzrings 3.

In Fig. 3 ist ein Ausführungsbeispiel dargestellt, das doppelt dichtend wirkt. Dabei ist der Zwischenkolben 8 sowie der Sitzring 3 etwas unterschiedlich ausgebildet. Die zwischen dem Zwischenkolben 8 und dem Sitzring 3 angeordnete Dichtung 5 dient dabei als zusätzliche Kolbenfläche und stützt sich je nach Druckverhältnissen einmal gegen den Zwischenkolben 8 und einmal gegen den Sitzring 3 ab, so daß entsprechende Kräfte übertragen werden. Die Differenzdruckfläche für die Abdichtung des Innenraums 18 wird durch die Differenz des Innendurchmessers der O-Ringdichtung 5 und des Außendurchmessers des Dichtrings 4 bestimmt, während die Leitung 19 durch die Federkraft der Feder 6 und der durch den Außendurchmesser der Dichtung 5 und den Innendurchmesser des Dichtrings 4 bestimmten Differenzdruckfläche abgedichtet wird.

Darüber hinaus stützt sich in diesem Ausführungsbeispiel der Zwischenkolben 8 nicht direkt am Gehäuse 1 ab, sondern auf der Außenfläche des Zwischenkolbens 8 ist ein Anschlagring 24 vorgesehen, der beispielsweise als Split-Body-Ring ausgeführt ist und der Zwischenkolben weist einen Absatz 25 auf, der ohne Druckbeaufschlagung der Kammer 16 an dem Ring 24 anliegt. Diese Ausführungsform ist für sogenannte "Top entry" Kugelhähne vorgesehen, bei denen Reparaturen im in der Leitung eingebauten Zustand durch Zurückziehen der Dichtungsanordnung und Herausnehmen des Kükens 2 von oben her durchgeführt werden. In diesem Fall wird das Anschlagelement 24 entfernt, so daß der Sitzring weit abgehoben werden kann.

Die Erfindung wurde anhand eines Kugelhahns beschrieben. Selbstverständlich ist die erfindungsgemäße Vorrichtung auch bei Gleitringdichtungen in Turbinengehäusen, bei Schiebern, Regelhähnen oder Ventilen zur hydraulisch/pneumatischen Spaltregulierung und damit zu einer Strömungsregulierung oder dergleichen anwendbar.

Zur Regelung der Durchflußmengen über den Innenraum 18 bei geschlossenem oder teilweise geöffneten Absperrorgan wird der Druck des Druckmediums zu den Kammern so geregelt, daß sich unterschiedliche Verschiebewege des Sitzringes und somit unterschiedliche Spaltbreiten zwischen Dichtring und Absperrorgan ergeben.

## Patentansprüche

1. Vorrichtung zum Abdichten von in Leitungen für die Förderung von Flüssigkeiten oder Gasen angeordneten Absperrorganen (2), mit einer Dichtungsanordnung (20), die das Absperrorgan (2) gegen ein Gehäuse (1) abdichtet, wobei die Dichtungsanordnung (20) einen gegen die Mantelfläche des Absperrorgans (2) anlegbaren Dichtring (4) und einen den Dichtring abstützenden Sitzring (3) aufweist, und mit zwei mit einem Druckmedium steuerbar beaufschlagbaren Kammern (16,17), über die der Dichtring (4) von der Mantelfläche abhebbar und gegen diese anpreßbar ist,
**dadurch gekennzeichnet,**
daß die Dichtungsanordnung einen Mitnehmerkörper (7), der formschlüssig mit dem Sitzring (3) verbunden ist, und einen auf dem Mitnehmerkörper angeordneten verschiebbaren Zwischenkolben (8) aufweist, wobei die erste Kammer (17) zwischen Mitnehmerkörper (7) und Zwischenkolben (8) liegt und bei Beaufschlagen mit gesteuertem Druck eine Bewegung des Mitnehmerkörpers (7) in Abheberichtung des Dichtrings bewirkt und die zweite Kammer (16) zwischen Zwischenkolben (8) und Gehäuse (1) angeordnet ist und bei Beaufschlagung mit gesteuertem Druck eine Bewegung des Zwischenkolbens (8) in Andruckrichtung bewirkt und daß zwischen Sitzring (3) und Zwischenkolben (8) Federelemente (6) angeordnet sind, die in Andruckrichtung vorgespannt sind.

2. Vorrichtung nach Anspruch 1, dadurch gekennzeichnet, daß der Mitnehmerkörper (7) als langgestreckte Hülse mit einer in dem dem Absperrorgan (2) zugewandten Bereich ausgeformten Schulter (21), die die formschlüssige Verbindung mit dem Sitzring (3) bildet, und einem an dem dem Absperrorgan (2) abgewandten Bereich vorgesehenen Flansch (22) ausgebildet ist, wobei die erste Kammer (17) zwischen Stirnfläche des Zwischenkolbens (8) und Flanschfläche gebildet wird.

3. Vorrichtung nach Anspruch 2, dadurch gekennzeichnet, daß sich an den Flansch (22) des Mitnehmerkörpers (7) ein Ansatz (23) mit zu dem Außendurchmesser des Flansches verringertem Durchmesser anschließt, der den Zwischenraum zwischen Stirnfläche des Flansches (22) und Gehäuse (1) gegen die Leitung (19) absperrt.

4. Vorrichtung nach einem der Ansprüche 1 bis 3, dadurch gekennzeichnet, daß ein entfernbares Element (24) in dem Gehäuse (1) abgestützt ist, das als Anschlag für die Bewegung des Zwischenkolbens (8) in Abheberichtung dient, wobei nach Entfernen des Elementes (24) der Zwischenkolben (8) weiter in Abheberichtung verschiebbar ist.

5. Vorrichtung nach Anspruch 4, dadurch gekennzeichnet, daß das Element (24) ein einmal geschlitzter Ring ist.

6. Vorrichtung nach einem der Ansprüche 1 bis 5, dadurch gekennzeichnet, daß der Druck in den Kammern (16,17) abhängig von gewünschten Durchflußmengen zwischen Leitung (19) und Innenraum (18) und umgekehrt geregelt wird.

## Claims

1. Device for the sealing of blocking elements (2) arranged in ducts for the conveying of liquids or gases, with a sealing arrangement (20) which seals the blocking element (20) relative to a housing (1), wherein the sealing arrangement (20) has a sealing ring (4) placeable against the circumferential surface of the blocking element (2) and a seating ring (3) supporting the sealing ring, and with two chambers (16, 17) which are controllably loadable by a pressure medium and by way of which the sealing ring (4) can be lifted off and pressed against the circumferential surface, characterised thereby that the sealing arrangement comprises an entraining body (7), which is mechanically positively connected with the seating ring (3), and a displaceable intermediate piston (8) arranged on the entraining body, wherein the first chamber (17) lies between the entraining body (7) and intermediate piston (8), and on loading by controlled pressure, effects a movement of the entraining body (7) in the direction of lifting-off of the sealing ring and the second chamber (16) is arranged between the intermediate piston (8) and housing (1) and, on loading by controlled pressure, effects a movement of the intermediate piston (8) in the direction of pressing, and that spring elements (6), which are biassed in the pressing direction, are arranged between the seating ring (3) and intermediate piston (8).

2. Device according to claim 1, characterised thereby that the entraining body (7) is constructed as an elongated sleeve with a shoulder (21), which is shaped out in the region facing the blocking element (2) and forms the mechanically positive connection with the seating ring (3), and a flange (22) provided at the region remote from the blocking element (2), wherein the first chamber (17) is formed between the end face of the intermediate piston (8) and the flange surface.

3. Device according to claim 2, characterised thereby that a projection (23) with a diameter reduced relative to the outer diameter of the flange (22) is connected to the flange and blocks the intermediate space between the end face of the flange (22) and the housing (1) relative to the duct (19).

4. Device according to one of claims 1 to 3, characterised thereby that a removable element (24) is supported in the housing (1) and serves as an abutment for the movement of the intermediate piston (8) in the direction of lifting off, wherein after removal of the element (24) the intermediate piston (8) is further displaceable in the direction of lifting off.

5. Device according to claim 4, characterised thereby that the element (24) is a singly slotted ring.

6. Device according to one of claims 1 to 5, characterised thereby that the pressure in the chambers (16, 17) is regulated in dependence on desired pressure flow quantities between the duct (19) and inner space (18) and conversely.

## Revendications

1. Dispositif de fermeture étanche d'organes d'isolement (2) disposé dans des conduites destinées au transport de liquides ou de gaz, comprenant un organe d'étanchéité (20), isolant l'organe (2) vis-à-vis d'un corps (1), l'organe d'étanchéité (20) présentant une bague d'étanchéité (4), susceptible d'être appliquée contre la surface de l'organe (2), et une bague de siège (3) soutenant la bague d'étanchéité, et comportant deux chambres (16, 17), susceptibles d'être alimentées. sous l'effet d'une commande, par un fluide sous pression, chambres par l'intermédiaire desquelles la bague d'étanchéité (4) est susceptible d'être soulevée de la surface (2) et être pressée contre celle-ci, caractérisé en ce que l'organe d'étanchéité présente un corps d'entraînement (7), relié avec ajustement de forme à la bague de siège (3), et un piston intermédiaire (8) susceptible d'être déplacé, disposé sur le corps d'entraînement, la première chambre (17) étant située entre le corps d'entraînement (7) et le piston intermédiaire (8) et provoquant, en cas d'exposition à une pression régulée, un déplacement de l'organe d'entraînement (7) dans la direction du soulèvement de la bague d'étanchéité et la deuxième chambre (16) étant disposée entre le piston intermédiaire (8) et le corps (1) et provoquant, en cas d'exposition à une pression régulée, un déplacement du piston intermédiaire (8) dans la direction selon laquelle s'exerce la pression, et en ce que, entre la bague de siège (3) et le piston intermédiaire (8), sont disposés des éléments élastiques (6) précontraints dans cette direction.

2. Dispositif selon la revendication 1, caractérisé en ce que le corps d'entraînement(7) est réalisé sous forme de douille allongée comportant un épaulement (21) formé dans une zone tournée vers l'organe d'isolement (2), épaulement constituant la liaison avec ajustement de forme avec la bague de siège (3), et avec une bride (22), prévue sur la zone opposée à l'organe d'isolement (2), la première chambre (17) étant constituée entre la face frontale du piston intermédiaire (8) et la surface de bride.

3. Dispositif selon la revendication 2, caractérisé en ce qu'à la bride (22) du corps d'entraînement (7) se raccorde un appendice (23) d'un diamètre réduit par rapport au diamètre extérieur de la bride et isolant, par rapport à la conduite (19), l'espace intermédiaire constitué entre la face frontale de la bride (22) et le corps (1).

4. Dispositif selon l'une des revendications 1 à 3, caractérisé en ce qu'un élément (24) amovible est soutenu dans le corps (1) et sert de butée au déplacement du piston intermédiaire (8) dans la direction du soulèvement, le piston intermédiaire (8) étant susceptible d'être déplacé plus encore dans la direction du soulèvement après enlèvement de l'élément (24).

5. Dispositif selon la revendication 4, caractérisé en ce que l'élément (24) est un anneau à une fente.

6. Dispositif selon l'une des revendications 1 à 5, caractérisé en ce que la pression régnant dans les chambres (16, 17) est régulée en fonction des débits souhaités entre la conduite (19) et l'espace intérieur (18) et inversement.
